# EUROPÄISCHE PATENTSCHRIFT

(11) **EP 2 510 056 B1**
(45) Veröffentlichungstag und Bekanntmachung des Hinweises auf die Patenterteilung: **04.12.2013**
(21) Anmeldenummer: 10788317.5
(22) Anmeldetag: 07.12.2010
(51) Int. Cl.: C08L 77/06, C08G 69/26

(54) **TEILAROMATISCHE, TEILKRISTALLINE COPOLYAMIDE**
SEMI-AROMATIC, SEMI-CRYSTALLINE COPOLYAMIDES
COPOLYAMIDE SEMI-AROMATIQUE, SEMI-CRISTALLIN

(30) Priorität: 09.12.2009 EP 09178480
(43) Veröffentlichungstag der Anmeldung: 17.10.2012
(73) Patentinhaber: BASF SE, 67056 Ludwigshafen (DE)
(72) Erfinder: DESBOIS, Philippe, 68535 Edingen-Neckarhausen (DE); WOLLNY, Andreas, 67063 Ludwigshafen (DE)
(86) Internationale Anmeldenummer: PCT/EP2010/069013
(87) Internationale Veröffentlichungsnummer: WO 2011/069984

(56) Entgegenhaltungen:
- EP-A1- 2 028 231
- EP-A2- 0 325 030
- EP-A2- 0 667 367
- EP-A2- 1 930 373
- DE-A1- 3 738 876

## Beschreibung

Die Erfindung betrifft teilaromatische, teilkristalline Copolyamidformmassen, enthaltend
A) 35 bis 100 Gew.-% eines Copolyamids aufgebaut aus
   a₁) 35 bis 55 Gew.-% Einheiten, welche sich von Hexamethylendiamin und einer aromatischen Dicarbonsäure mit 8 bis 16 C-Atomen ableiten,
   a₂) 31 bis 60 Gew.-% Einheiten, welche sich von 3,3'-Dimethyl-4,4'-diaminodicyclohexylmethan und Terephthalsäure ableiten,
   a₃) 5 bis 25 Gew.-% Einheiten, welche aus Hexamethylendiamin und Adipinsäure aufgebaut sind,
B) 0 bis 65 Gew.-% weiterer Zusatzstoffe,
wobei die Summe der Gewichtsprozente A) und B) 100 % ergibt.

Weiterhin betrifft die Erfindung die Verwendung der erfindungsgemäßen Copolyamide zur Herstellung von Fasern. Folien und Formkörpern jeglicher Art, sowie die hierbei erhältlichen Formkörper.

Hochtemperaturbeständige Polyamide (HTPA) bauen meist auf den Einheiten 6T (Hexamethylendiamin, Terephthalsäure) auf. Reines 6T weist jedoch eine sehr hohe Schmelztemperatur auf und kann ohne Zersetzung nicht verarbeitet werden. Entsprechend wurden Copolymersysteme entwickelt, die dies vermeiden sollen: z.B. EP-A 299 444 (PA6/6T, PA66/6T), EP-A 19 94 075 (PA6T/6I/MXD6), EP-A 667 367 (6T/6I/cycloaliphatisches Diamin) sowie EP-A 1930 373 und DE-A 37 38 876.

Die Verringerung der Schmelztemperatur mit Menge des eingebauten Copolyamids ist systematisch für die Systeme PA 6T/6, 6T/6I, 6T/66 und 4T/46 untersucht worden [G. Ajroldi, G. Stea, A. Mattiussi, F. Fumagalli, J. Appl. Poly. Sci. 1973, 17, 3187-3197, H. Ludewig, Faserforschung und Textilchemie 1955, 6, 277; Gaymans et al., J. Polym. Sci. A, Chem. 1989, 27, 423-430].

HTPA's, welche eine möglichst hohe Glasübergangstemperatur und eine hohe Schmelztemperatur (ohne Zersetzung) aufweisen, sind insbesondere für eine problemlose Verarbeitung für viele Anwendungen gewünscht.

Der vorliegenden Erfindung lag daher die Aufgabe zugrunde, teilaromatische, teilkristalline Copolyamide zur Verfügung zu stellen, welche eine hohe T_{G} und eine hohe Tₘ (ohne Zersetzung) aufweisen.

Demgemäß wurden die eingangs definierten Copolyamidformmassen gefunden. Bevorzugte Ausführungsformen sind den Unteransprüchen zu entnehmen.

Als Komponente A) enthalten die erfindungsgemäßen Copolyamidformmassen 35 bis 100, vorzugsweise 35 bis 95 Gew.-% eines Copolyamides, aufgebaut aus
a₁) 35 bis 55, vorzugsweise 40 bis 55, insbesondere 40 bis 52 Gew.-% Einheiten, welche sich von Hexamethylendiamin und einer aromatischen Dicarbonsäure mit 8 bis 16 C-Atomen ableiten.

Geeignete aromatische Dicarbonsäuren sind beispielsweise Terephthalsäure, Isophthalsäure, substituierte Terephthal- und Isophthalsäuren wie 3-t-Butylisophthalsäure, mehrkernige Dicarbonsäuren, z.B. 4,4'- und 3,3'-Diphenyldicarbonsäure, Phthalsäure, 4,4'- und 3,3'-Diphenylmethandicarbonsäure, 4,4'- und 3,3'-Diphenylsulfondicarbonsäure, 1,4- oder 2,6-Naphthalindicarbonsäure, Phenoxyterephthalsäure, wobei Terephthalsäure besonders bevorzugt ist.

Die Einheiten a₂) sind in Mengen von 31 bis 60, vorzugsweise von 45 bis 60 und insbesondere von 48 bis 60 Gew.-% im Copolyamid A) vorhanden. Diese leiten sich von 3,3'-Dimethyl-4,4'-diamino-dicyclohexylmethan und Terephthalsäure ab.

Das Diamin wird vorzugsweise in einer Stereoisomerenzusammensetzung von 50 bis 80 Gew.-% des trans-trans-Isomeren eingesetzt, während der Rest sich aus cis-trans-und cis-cis-Isomeren zusammensetzt und der Anteil des cis-cis-Isomeren bevorzugt kleiner als 10 Gew.-% ist.

Als Einheiten a₃) enthalten die erfindungsgemäßen Copolyamide Einheiten, welche aus Hexamethylendiamin und Adipinsäure aufgebaut sind.
Es ergeben sich folgende Zusammensetzungen:
a₁) 35 bis 55, insbesondere 40 bis 50 Gew.-%
a₂) 35 bis 60, insbesondere 35 bis 45 Gew.-%
a₃) 5 bis 25, insbesondere 10 bis 22 Gew.-%

Die Polyamide A) können nach an sich bekannten Verfahren hergestellt werden (z.B. EP 129195, US 3,948,862). Ebenso kann das in WO 2007/23108 beschriebene Verfahren zur Anwendung kommen, bei dem die entsprechenden Dinitrile der Disäuren als Säureäquivalente verwendet werden oder durch sog. Direktpolymerisation in Anwesenheit von Wasser, wie beispielsweise in der DE-A 10313681, EP-A 1198491 und EP 922065 beschrieben.

Die Herstellung der erfindungsgemäßen Polyamide erfolgt bevorzugt in einer diskontinuierlichen oder kontinuierlichen hydrolytischen Polykondensationsreaktion zwischen den entsprechenden Diaminen und freien Dicarbonsäuren aus wässriger Lösung oder aus einer wässrigen Lösung eines wasserlöslichen Hypophosphitsalzes (0,05 bis 0,5 Gew.-%). Das so gebildete Präpolymer mit einer Viskositätszahl (VZ) von 40 bis 120 ml/g (in konz. Schwefelsäure, 0,5 Gew.-%, ISO 307) wird einer Nachkondensation entweder in fester Phase oder im geschmolzenen Zustand in einem Extruder unterworfen bis eine VZ von mindestens 80 ml/g erreicht ist, vorzugsweise von 100 bis 300 ml/g.

Alternativ kann das erfindungsgemäße Copolyamid aus einem Polyamid mit Einheiten a₁) und einem Polyamid mit Einheiten a₂) durch Aufschmelzen und Umamidierung in der Schmelze, insbesondere in einem Extruder, erzeugt werden. Dabei werden die jeweiligen Polyamide getrennt zugeführt und ggf. katalytisch wirksame Additive und/ oder Beschleuniger (z.B. Hypophosphit-Verbindungen, Organophosphite, Organophosphonate) zugesetzt. Das so erzeugte Copolyamid weist dabei nach der Umamidierung und Copolyamidbildung nur eine einheitliche Glastemperatur auf.

Die Copolyamide A) weisen vorzugsweise eine Glasübergangstemperatur T_{G} von gröβer 135°C, besonders von größer 145°C und insbesondere von 150 bis 190°C auf.

Die Schmelztemperatur Tₘ beträgt vorzugsweise kleiner 330°C, insbesondere von 295 bis 325°C. Diese Parameter werden üblicherweise mittels DSC (Differential Scanning Calorimetrie) gemäß ISO 11357-2, 3 und 7 gemessen (20 K/min, 2. Aufheizkurve).

Der Quotient T_{G} [Kelvin]/Tₘ [K] beträgt vorzugsweise mindestens 0,71, insbesondere mindestens 0,72, ganz besonders bevorzugt 0,73.

Als Komponente B) können die erfindungsgemäßen Formmassen bis zu 65, vorzugsweise bis zu 50 Gew.-% weiterer Zusatzstoffe enthalten.

Als faser- oder teilchenförmige Füllstoffe seien Kohlenstofffasem, Glasfasern, Glaskugeln, amorphe Kieselsäure, Calciumsilicat, Calciummetasilicat, Magnesiumcarbonat, Kaolin, Kreide, gepulverter Quarz, Glimmer, Bariumsulfat und Feldspat genannt, die in Mengen von 1 bis 50 Gew.-%, insbesondere 5 bis 40, vorzugsweise 10 bis 40 Gew.-% eingesetzt werden.

Als bevorzugte faserförmige Füllstoffe seien Kohlenstofffasern, Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Die faserförmigen Füllstoffe können zur besseren Verträglichkeit mit dem Thermoplasten mit einer Silanverbindung oberflächlich vorbehandelt sein.

Geeignete Silanverbindungen sind solche der allgemeinen Formel

(X-(CH₂)ₙ)ₖ-Si-(O-CₘH_{2M+1})₄₋ₖ

in der die Substituenten folgende Bedeutung haben: 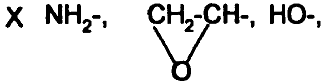
- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1.

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen werden im Allgemeinen in Mengen von 0,01 bis 2, vorzugsweise 0,025 bis 1,0 und insbesondere 0,05 bis 0,5 Gew.-% (bezogen auf B)) zur Oberflächenbeschichtung eingesetzt.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als weitere Füllstoffe seien Kaolin, calciniertes Kaolin, Wollastonit, Talkum und Kreide genannt sowie zusätzlich plättchen- oder nadelförmige Nanofüllstoffe bevorzugt in Mengen zwischen 0,1 und 10 %. Bevorzugt werden hierfür Böhmit, Bentonit, Montmorillonit, Vermicullit, Hektorit und Laponit eingesetzt. Um eine gute Verträglichkeit der plättchenförmigen Nanofüllstoffe mit dem organischen Bindemittel zu erhalten, werden die plättchenförmigen Nanofüllstoffe nach dem Stand der Technik organisch modifiziert. Der Zusatz der plättchen- oder nadelförmigen Nanofüllstoffe zu den erfindungsgemäßen Nanokompositen führt zu einer weiteren Steigerung der mechanischen Festigkeit.

Als Komponente B) können die erfindungsgemäßen Formmassen 0,05 bis 3, vorzugsweise 0,1 bis 1,5 und insbesondere 0,1 bis 1 Gew.-% eines Schmiermittels enthalten. Bevorzugt sind Al-, Alkali-, Erdalkalisalze oder Ester oder Amide von Fettsäuren mit 10 bis 44 C-Atomen, vorzugsweise mit 12 bis 44 C-Atomen.

Die Metallionen sind vorzugsweise Erdalkali und Al, wobei Ca oder Mg besonders bevorzugt sind.

Bevorzugte Metallsalze sind Ca-Stearat und Ca-Montanat sowie Al-Stearat.

Es können auch Mischungen verschiedener Salze eingesetzt werden, wobei das Mischungsverhältnis beliebig ist.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitat, Glycerintrilaurat, Glycerinmonobehenat und Pentaerythrittetrastearat.

Es können auch Mischungen verschiedener Ester oder Amide oder Ester mit Amiden in Kombination eingesetzt werden, wobei das Mischungsverhältnis beliebig ist.

Als Komponente B) können die erfindungsgemäßen Formmassen 0,05 bis 3, vorzugsweise 0,1 bis 1,5 und insbesondere 0,1 bis 1 Gew.-% eines Cu-Stabilisators, vorzugsweise eines Cu-(I)-Halogenids, insbesondere in Mischung mit einem Alkalihalogenid, vorzugsweise KJ, insbesondere im Verhältnis 1 : 4., oder eines sterisch gehinderten Phenols oder deren Mischungen enthalten.

Als Salze des einwertigen Kupfers kommen vorzugsweise Kupfer(I)-Acetat, Kupfer(I)-Chlorid, -Bromid und -Jodid in Frage. Diese sind in Mengen von 5 bis 500 ppm Kupfer, vorzugsweise 10 bis 250 ppm, bezogen auf Polyamid, enthalten.

Die vorteilhaften Eigenschaften werden insbesondere erhalten, wenn das Kupfer in molekularer Verteilung im Polyamid vorliegt. Dies wird erreicht, wenn man der Formmasse ein Konzentrat zusetzt, das Polyamid, ein Salz des einwertigen Kupfers und ein Alkalihalogenid in Form einer festen, homogenen Lösung enthält. Ein typisches Konzentrat besteht z.B. aus 79 bis 95 Gew.-% Polyamid und 21 bis 5 Gew.-% eines Gemisches aus Kupferjodid oder -bromid und Kaliumjodid. Die Konzentration der festen homogenen Lösung an Kupfer liegt bevorzugt zwischen 0,3 und 3, insbesondere zwischen 0,5 und 2 Gew.-%, bezogen auf das Gesamtgewicht der Lösung und das molare Verhältnis von Kupfer(I)-Jodid zu Kaliumjodid liegt zwischen 1 und 11,5, vorzugsweise zwischen 1 und 5.

Geeignete Polyamide für das Konzentrat sind Homopolyamide und Copolyamide, insbesondere Polyamid 6 und Polyamid 6.6.

Als sterisch gehinderte Phenole B) eignen sich prinzipiell alle Verbindungen mit phenolischer Struktur, die am phenolischen Ring mindestens eine sterisch anspruchsvolle Gruppe aufweisen.

Vorzugsweise kommen z.B. Verbindungen der Formel 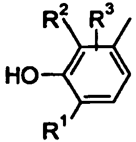 in Betracht, in der bedeuten:
R¹ und R² eine Alkylgruppe, eine substituierte Alkylgruppe oder eine substituierte Triazolgruppe, wobei die Reste R¹ und R² gleich oder verschieden sein können und R³ eine Alkylgruppe, eine substituierte Alkylgruppe, eine Alkoxigruppe oder eine substituierte Aminogruppe.

Antioxidantien der genannten Art werden beispielsweise in der DE-A 27 02 661 (US-A 4 360 617) beschrieben.

Eine weitere Gruppe bevorzugter sterisch gehinderter Phenole leiten sich von substituierten Benzolcarbonsäuren ab, insbesondere von substituierten Benzolpropionsäuren.

Besonders bevorzugte Verbindungen aus dieser Klasse sind Verbindungen der Formel 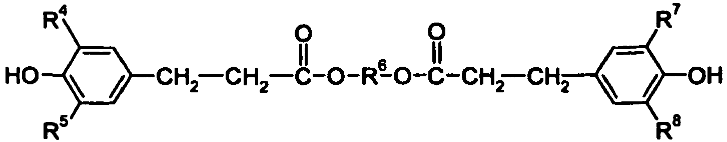 wobei R⁴, R⁵, R⁷ und R⁸ unabhängig voneinander C₁-C₈-Alkylgruppen darstellen, die ihrerseits substituiert sein können (mindestens eine davon ist eine sterisch anspruchsvolle Gruppe) und R⁶ einen zweiwertigen aliphatischen Rest mit 1 bis 10 C-Atomen bedeutet, der in der Hauptkette auch C-O-Bindungen aufweisen kann.

Bevorzugte Verbindungen, die diesen Formeln entsprechen, sind

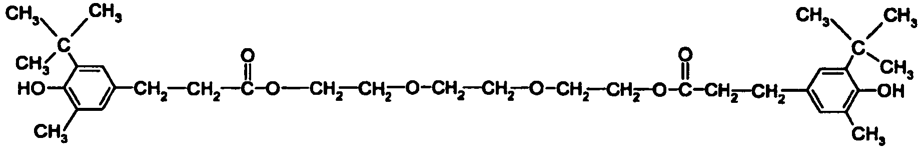

### (Irganox® 245 der Firma BASF SE)

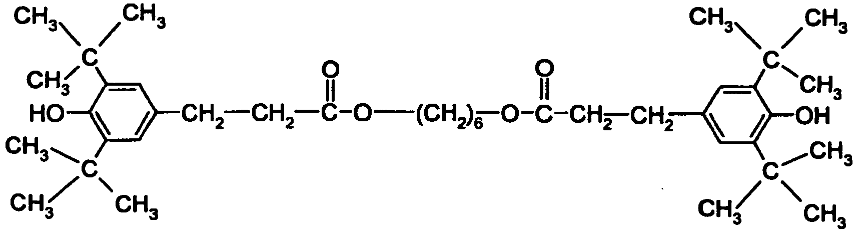

### (Irganox® 259 der Firma BASF SE)

Beispielhaft genannt seien insgesamt als sterisch gehinderte Phenole:
2,2'-Methylen-bis-(4-methyl-6-tert.-butylphenol), 1,6-Hexandiol-bis[3-(3,5-di-tert.-butyl-4-hydroxyphenyl)-propionat], Pentaerythrityl-tetrakis-[3-(3,5-di-tert.-butyl-4-hydroxy-phenyl)-propionat], Distearyl-3,5-di-tert.-butyl-4-hydroxybenzylphosphonat, 2,6,7-. Trioxa-1-phosphabicyclo-[2.2.2]oct-4-yl-methyl-3,5-di-tert.-butyl-4-hydroxyhydro-cinnamat, 3,5-Di-tert.-butyl-4-hydroxyphenyl-3,5-distearyl-thiotriazylamin, 2-(2'-Hydroxy-3'-hydroxy-3',5'di-tert.-butylphenyl)-5-chlorbenzotriazol, 2,6-Di-tert.-butyl-4-hydroxymethylphenol, 1,3,5-Trimethyl-2,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxybenzyl-dimethylamin.

Als besonders wirksam erwiesen haben sich und daher vorzugsweise verwendet werden 2,2'-Methylen-bis-(4-methyl-6-tert.-butylphenyl), 1,6-Hexandiol-bis-(3,5-di-tert.-butyl-4-hydroxyphenol]-propionat (Irganox® 259), Pentaerythrityl-tetrakis-[3-(3,5-ditert.-butyl-4-hydroxyphenyl)-propionat] sowie N,N'-Hexamethylen-bis-3,5-di-tert.-butyl-4-hydroxyhydrocinnamid (Irganox® 1098) und das vorstehend beschriebene Irganox® 245 der Firma BASF SE, das besonders gut geeignet ist.

Die Antioxidantien B), die einzeln oder als Gemische eingesetzt werden können, sind in einer Menge von 0,05 bis zu 3 Gew.-%, vorzugsweise von 0,1 bis 1,5 Gew.-%, insbesondere 0,1 bis 1 Gew.-%, bezogen auf das Gesamtgewicht der Formmassen A) bis B) enthalten.

In manchen Fällen haben sich sterisch gehinderte Phenole mit nicht mehr als einer sterisch gehinderten Gruppe in ortho-Stellung zur phenolischen Hydroxygruppe als besonders vorteilhaft erwiesen; insbesondere bei der Beurteilung der Farbstabilität bei Lagerung in diffusem Licht über längere Zeiträume.

Als Komponente B) können die erfindungsgemäßen Formmassen 0,05 bis 5, vorzugsweise 0,1 bis 2 und insbesondere 0,25 bis 1,5 Gew.-% eines Nigrosins enthalten.

Unter Nigrosinen versteht man im allgemeinen eine Gruppe von schwarzen oder grauen, mit den Indulinen verwandten Phenazin-Farbstoffen (Azin-Farbstoffen) in verschiedenen Ausführungsformen (wasserlöslich, fettlöslich, spritlöslich), die bei Wollfärberei und -druck, beim Schwarzfärben von Seiden, zum Färben von Leder, Schuhcremes, Firnissen, Kunststoffen, Einbrennlacken, Tinten und dergleichen, sowie als Mikroskopiefarbstoffe Verwendung finden.

Man gewinnt die Nigrosine technisch durch Erhitzen von Nitrobenzol, Anilin und salzsaurem Anilin mit metall. Eisen und FeCl₃ (Name von lateinischem niger = schwarz).

Die Komponente B) kann als freie Base oder auch als Salz (z.B. Hydrochlorid) eingesetzt werden.

Weitere Einzelheiten zu Nigrosinen sind beispielsweise dem elektronischen Lexikon Römpp Online, Version 2.8, Thieme-Verlag Stuttgart, 2006, Stichwort "Nigrosin" zu entnehmen.

Weitere übliche Zusatzstoffe B) sind beispielsweise in Mengen bis zu 25, vorzugsweise bis zu 20 Gew.-% kautschukelastische Polymerisate (oft auch als Schlagzähmodfier, Elastomere oder Kautschuke bezeichnet).

Ganz allgemein handelt es sich dabei um Copolymerisate die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag, Stuttgart, 1961). Seiten 392 bis 406 und in der Monographie von C.B. Bucknall, "Toughened Plastics" (Applied Science Publishers, London, 1977) beschrieben.

Im Folgenden werden einige bevorzugte Arten solcher Elastomerer vorgestellt.

Bevorzugte Arten von solchen Elastomeren sind die sog. Ethylen-Propylen (EPM) bzw. Ethylen-Propylen-Dien-(EPDM)-Kautschuke.

EPM-Kautschuke haben im Allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbomen, 5-Butyliden-2-norbomen, 2-Methallyl-5-norbornen, 2-Isopropenyl-5-norbomen und Tricyclodiene wie 3-Methyltricyclo(5.2.1.0.2.6)-3,8-decadien oder deren Mischungen genannt. Bevorzugt werden Hexa-1,5-dien, 5-Ethylidennorbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate, z.B. Glycidyl(meth)acrylat, sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln I oder II oder III oder IV zum Monomerengemisch in den Kautschuk eingebaut

R¹C(COOR²)=C(COOR³)R⁴ (I)

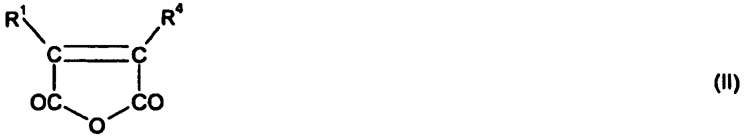

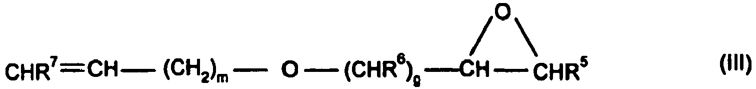

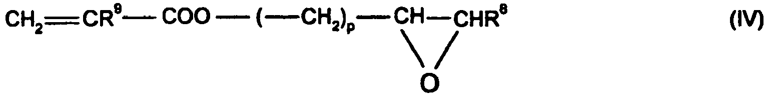

wobei R¹ bis R⁹ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste R¹ bis R⁹ Wasserstoff, wobei m für 0 oder 1 und g für 1 steht. Die entsprechenden Verbindungen sind Maleinsäure, Fumarsäure, Maleinsäureanhydrid, Allylglycidylether und Vinylglycidylether.

Bevorzugte Verbindungen der Formeln I, II and IV sind Maleinsäure, Maleinsäureanhydrid und Epoxygruppen-enthaltende Ester der Acrylsäure und/oder Methacrylsäure, wie Glycidylacrylat, Glycidylmethacrylat und die Ester mit tertiären Alkoholen, wie t-Butylacrylat. Letztere weisen zwar keine freien Carboxylgruppen auf, kommen in ihrem Verhalten aber den freien Säuren nahe und werden deshalb als Monomere mit latenten Carboxylgruppen bezeichnet.

Vorteilhaft bestehen die Copolymeren aus 50 bis 98 Gew.-% Ethylen, 0,1 bis 20 Gew.-% Epoxygruppen enthaltenden Monomeren und/oder Methacrylsäure und/oder Säure-anhydridgruppen enthaltenden Monomeren sowie der restlichen Menge an (Meth)acrylsäureestem.

Besonders bevorzugt sind Copolymerisate aus

| | |
|---|---|
| 50 bis 98, | insbesondere 55 bis 95 Gew.-% Ethylen, |
| 0,1 bis 40, | insbesondere 0,3 bis 20 Gew.-% Glycidylacrylat undloder Glycidylmethacrylat, (Meth)acrylsäure und/oder Maleinsäureanhydrid, und |
| 1 bis 45, | insbesondere 5 bis 40 Gew.-% n-Butylacrylat und/oder 2-Ethylhexylacrylat. |

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalysatoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflusst.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestem und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel 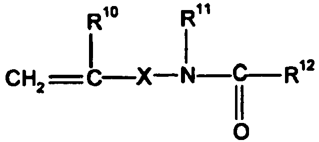 eingeführt werden können,
wobei die Substituenten folgende Bedeutung haben können:
- R¹⁰: Wasserstoff oder eine C₁- bis C₄-Alkylgruppe,
- R¹¹: Wasserstoff, eine C₁- bis C₈-Alkylgruppe oder eine Arylgruppe, insbesondere Phenyl,
- R¹²: Wasserstoff, eine C₁- bis C₁₀-Alkyl-, eine C₆- bis C₁₂-Arylgruppe oder -OR¹³
- R¹³: eine C₁- bis C₈-Alkyl- oder C₆- bis C₁₂-Arylgruppe, die gegebenenfalls mit O- oder N-haltigen Gruppen substituiert sein können,
- X: eine chemische Bindung, eine C₁- bis C₁₀-Alkylen- oder C₆-C₁₂-Arylengruppe oder 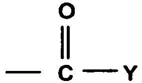
- Y: O-Z oder NH-Z und
- Z: eine C₁- bis C₁₀-Alkylen- oder C₆- bis C₁₂-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)-ethylmethacrylat, (N,N-Dimethyl-amino)ethylacrylat, (N,N-Dimethylamino)-methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannte pfropfvernetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im Allgemeinen beträgt der Anteil dieser vernetzenden Monomeren an dem schlagzäh modifizierenden Polymer bis zu 5 Gew.-%, vorzugsweise nicht mehr als 3 Gew.-%, bezogen auf das schlagzäh modifizierende Polymere.

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| I | Buta-1,3-dien, Isopren, n-Butylacrylat, Ethylhexylacrylat oder deren Mischungen | Styrol, Acrylnitril, Methylmethacrylat |
| II | wie I aber unter Mitverwendung von Vernetzern | wie I |
| III | wie I oder II | n-Butylacrylat, Methylacrylat, Methylacrylat, Buta-1,3-dien, Isopren, Ethylhexyl-acrylat |
| IV | wie I oder II | wie I oder III aber unter Mitverwendung von Monomeren mit reaktiven Gruppen wie hierin beschrieben |
| V | Styrol, Acrylnitril, Methylmethacrylat oder deren Mischungen | erste Hülle aus Monomeren wie unter I und II für den Kern beschrieben zweite Hülle wie unter I oder IV für die Hülle beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen lieferm.

Die beschriebenen Elastomere können auch nach anderen üblichen Verfahren, z.B. durch Suspensionspolymerisation, hergestellt werden.

Siliconkautschuke, wie in der DE-A 37 25 576, der EP-A 235 690, der DE-A 38 00 603 und der EP-A 319 290 beschrieben, sind ebenfalls bevorzugt.

Selbstverständlich können auch Mischungen der vorstehend aufgeführten Kautschuktypen eingesetzt werden.

Als Komponente B) können die erfindungsgemäßen thermoplastischen Formmassen übliche Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher, usw. enthalten.

Als Beispiele für Oxidationsverzögerer und Wärmestabilisatoren sind sterisch gehinderte Phenole und/oder Phosphite und Amine (z.B. TAD), Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im Allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß, weiterhin organische Pigmente, wie Phthalocyanine, Chinacridone, Perylene sowie Farbstoffe, wie Anthrachinone als Farbmittel zugesetzt werden.

Als Keimbildungsmittel können Natriumphenylphosphinat, Aluminiumoxid, Siliziumdioxid sowie bevorzugt Talkum eingesetzt werden.

Die erfindungsgemäßen thermoplastischen Formmassen können nach an sich bekannten Verfahren hergestellt werden, in dem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 230 bis 320°C.

Nach einer weiteren bevorzugten Arbeitsweise können die Komponenten B) mit einem Präpolymeren gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente A) bis zur gewünschten Viskosität kondensiert.

Die erfindungsgemäßen thermoplastischen Formmassen zeichnen sich durch eine gute Verarbeitbarkeit bei gleichzeitig guter Mechanik aus, sowie durch eine hohe T_{G}, gekoppelt mit einer hohen Tₘ, jedoch ohne Zersetzung des Polymeren bei der Verarbeitung.

Diese eignen sich zur Herstellung von Fasern. Folien und Formkörpern jeglicher Art. Nachfolgend sind einige Beispiele genannt: Zylinderkopfhauben, Motorradabdeckungen, Ansaugrohre, Ladeluftkühlerkappen, Steckverbinder, Zahnräder, Lüfterräder, Kühlwasserkästen.

Im E/E-Bereich können mit fließverbesserten Polyamiden Stecker, Steckerteile, Steckverbinder, Membranschalter, Leiterplattenbaugruppen, mikroelektronische Bauteile, Spulen, I/0 Steckverbinder, Stecker für Leiterplatten (PCB), Stecker für flexible Leiterplatten (FPC), Stecker für flexible integrierte Schaltkreise (FFC), High-Speed Steckverbindungen, Klemmleisten, Anschlussstecker, Gerätestecker, Kabelbaumkomponenten, Schaltungsträger, Schaltungsträgerkomponen-ten, dreidimensional spritzgegossene Schaltungsträger, elektrische Verbindungselemente, mechatronische Komponenten hergestellt werden.

Im Auto-Innenraum ist eine Verwendung für Armaturentafeln, Lenkstockschalter, Sitzteile, Kopfstützen, Mittelkonsolen, Getriebe-Komponenten und Türmodule, im Auto-Außenraum für Türgriffe, Außenspiegelkomponenten, Scheibenwischerkomponenten, Scheibenwischerschutzgehäuse, Ziergitter, Dachreling, Schiebedachrahmen, Motorabdeckungen, Zylinderkopfhauben, Ansaugrohre (insbesondere Ansaugkrümmer), Scheibenwischer sowie Karosserieaußenteile möglich.

Für den Küchen- und Haushaltsbereich ist der Einsatz fließverbesserter Polyamide zur Herstellung von Komponenten für Küchengeräte, wie z.B. Friteusen, Bügeleisen, Knöpfe, sowie Anwendungen im Garten-Freizeitbereich, z.B. Komponenten für Bewässerungssysteme oder Gartengeräte und Türgriffe möglich.

### Beispiele

Hexamethylendiamin (6),3,3'-dimethyl-4,4'-diaminodicyclohexylmethan (L), Terephthalsäure (T), sowie gegebenenfalls Hexamethylendiamin und Adipinsäure wurden in einem Reagenzglas zusammen mit einer wässrigen Lösung von Natriumhypophosphitmonohydrat ("NHP"; 0,1 Gew.-%) eingewogen. Die entsprechenden Ansatzmengen der Beispiele sind in den folgenden Tabellen angegeben. Die Reaktionsmischung wurde in einen Autoklavreaktor eingebracht und 3 mal mit je 3 bar Stickstoff gespült. Der Autoklav wurde auf AT=200°C aufgeheizt und 1 h bei dieser T gehalten, anschließend wurde auf 350°C Außentemperatur aufgeheizt und ein Überdruck von 16 bar für insgesamt 2 Stunden gehalten durch kontinuierliches Entspannen. Anschließend wurde innerhalb von 60 Minuten der Autoklav auf Umgebungsdruck entspannt und unter Stickstoff-Strom für 120 Minuten bei der gleichen Temperatur die Nachkondensation durchgeführt. Nach Abkühlen unter Druck (P=10 bar) wurde das entnommene, trockene Produkt zerkleinert.

### DSC Messung:

Die DSC-Messungen wurden durchgeführt am Q-2000 der FA. Waters GmbH Die Einwaage betrug ca. 8,5 mg - die Heiz- und Kühlrate 20 K/min (2. Aufheizkurve) Gemessen wurden die Proben in Anlehnung an die ISO 11357-2, 3, u. 7 ΔH wurde wie folgt ermittelt:
Berechnung der Fläche unter der Schmelzkurve (2. Aufheizkurve)

| | Einwaage | | | | | | | | | | | |
|---|---|---|---|---|---|---|---|---|---|---|---|---|
| Bsp. | Hexamethylendiamin | Terephthalsäure | L | AH Salz | H₂O | PA 6T | PA LT | PA 66 | Tg2 | Tm2 | ΔH2 | Tg (K) /Tm(K) |
| | g | g | g | g | g | Gew.-% | Gew.-% | Gew.-% | °C | °C | J/g | |
| V1 | 7,58 | 7,48 | 0 | 0 | 14,95 | 100 | 0 | 0 | 140 | 371 | 140 | 0,64 |
| V2 | 0 | 0 | 0 | 15 | 15 | 0 | 0 | 100 | 58 | 256 | 98 | 0,63 |
| V3 | 0 | 6,15 | 8,82 | 0 | 14,97 | 0 | 100 | 0 | 262* | - | - | - |
| V4 | 6,56 | 7,81 | 2,75 | 0 | 15,21 | 70 | 30 | 0 | 168 | 317/346 | 54 | 0,71 |
| V5 | 2,83 | 6,81 | 5,87 | 0 | 14,58 | 32 | 68 | 0 | 208* | - | - | - |
| V6 | 3,68 | 7,14 | 5,29 | 0 | 14,79 | 41 | 59 | 0 | 183 | 321 | 2 | 0,78 |
| V7 | 4,6 | 7,48 | 4.45 | 0 | 14.91 | 51 | 49 | 0 | 185 | 307 | 14 | 0,79 |
| 3 | 3,8 | 6,31 | 3,7 | 1,52 | 15,2 | 46 | 44 | 11 | 153 | 301 | 34 | 0,74 |
| 4 | 9,18 | 15,3 | 6,12 | 3,06 | 15,3 | 40 | 38 | 21 | 137 | 297 | 37 | 0,72 |
| 5 | 4,21 | 6,31 | 3,24 | 1,5 | 15,05 | 50 | 39 | 11 | 150 | 308 | 41 | 0,73 |

| | | | | | | | | | | | | |
|---|---|---|---|---|---|---|---|---|---|---|---|---|
| * amorpher Erweichungspunkt | | | | | | | | | | | | |

## Patentansprüche

1. Teilaromatische, teilkristalline Copolyamidformmassen, enthaltend
A) 35 bis 100 Gew.-% eines Copolyamids aufgebaut aus
a₁) 35 bis 55 Gew.-% Einheiten, welche sich von Hexamethylendiamin und einer aromatischen Dicarbonsäure mit 8 bis 16 C-Atomen ableiten,
a₂) 31 bis 60 Gew.-% Einheiten, welche sich von 3,3'-Dimethyl-4,4'-diamino-dicyclohexylmethan und Terephthalsäure ableiten,
a₃) 5 bis 25 Gew.-% Einheiten, welche aus Hexamethylendiamin und Adipinsäure aufgebaut sind,
B) 0 bis 65 Gew.-% weiterer Zusatzstoffe,
wobei die Summe der Gewichtsprozente A) und B) 100 % ergibt.

2. Copolyamidformmassen nach Anspruch 1, in denen das Copolyamid A eine T_{G} (Glasübergangstemperatur) gemessen mittels DSC gemäß ISO 11357 - 2, 3 und 7 von größer 135°C aufweist.

3. Copolyamidformmassen nach den Ansprüchen 1 oder 2, in denen das Copolyamid A eine Schmelztemperatur Tₘ von kleiner 330°C aufweist (gemessen mittels DSC gemäß ISO 11357 - 2, 3 und 7).

4. Copolyamidformmassen nach den Ansprüchen 1 bis 3, in denen das Copolyamid A einen Quotienten T_{G} (K)/Tₘ (K) von mindestens 0,71 aufweist.

5. Copolyamidformmassen nach den Ansprüchen 1 bis 4, enthaltend als Einheiten a₁) Hexamethylendiamin und Terephthalsäure.

6. Verwendung der Copolyamidformmassen gemäß den Ansprüchen 1 bis 5 zur Herstellung von Fasern, Folien und Formkörpern.

7. Formkörper, erhältlich aus den Copolyamidformmassen gemäß den Ansprüchen 1 bis 5.

## Claims

1. A semiaromatic, semicrystalline copolyamide molding composition, comprising
A) from 35 to 100% by weight of a copolyamide composed of
a₁) from 35 to 55% by weight of units which derive from hexamethylenediamine and from an aromatic dicarboxylic acid having from 8 to 16 carbon atoms,
a₂) from 31 to 60% by weight of units which derive from 3,3'-dimethyl-4,4'-diaminodicyclohexylmethane and from terephthalic acid,
a₃) from 5 to 25% by weight of units which are composed of hexamethylenediamine and of adipic acid, and
B) from 0 to 65% by weight of further additives,
where the total of the percentages by weight of A) and B) is 100%.

2. The copolyamide molding composition according to claim 1, in which the T_{g} (glass transition temperature) of the copolyamide A, measured by means of DSC according to ISO 11357 - 2, 3, and 7 is greater than 135°C.

3. The copolyamide molding composition according to claims 1 or 2, in which the melting point Tₘ of the copolyamide A is below 330°C (measured by means of DSC according to ISO 11357 - 2, 3, and 7).

4. The copolyamide molding composition according to claims 1 to 3, in which the quotient T_{g} (K)/Tₘ (K) of the copolyamide A is at least 0.71.

5. The copolyamide molding composition according to claims 1 to 4, comprising, as units a₁), hexamethylenediamine and terephthalic acid.

6. The use of the copolyamide molding compositions according to claims 1 to 5 for producing fibers, foils, and moldings.

7. A molding, obtainable from the copolyamide molding compositions according to claims 1 to 5.

## Revendications

1. Matières à mouler à base de copolyamide semi-aromatique, semi-cristallin, contenant
A) 35 à 100 % en poids d'un copolyamide constitué de
a₁) 35 à 55 % en poids de motifs qui dérivent d'hexaméthylènediamine et d'un acide dicarboxylique aromatique ayant de 8 à 16 atomes de carbone,
a₂) 31 à 60 % en poids de motifs qui dérivent de 3,3'-diméthyl-4,4'-diamino-dicyclohexyl-méthane et d'acide téréphtalique,
a₃) 5 à 25 % en poids de motifs qui sont constitués d'hexaméthylènediamine et d'acide adipique,
B) 0 à 65 % en poids d'autres additifs,
la somme des pour cent en poids de A) et B) étant égale à 100 %.

2. Matières à mouler à base de copolyamide selon la revendication 1, dans lesquelles le copolyamide A présente une T_{G} (température de transition vitreuse), mesurée par DSC selon ISO 11357 - 2, 3 et 7, supérieure à 135 °C.

3. Matières à mouler à base de copolyamide selon la revendication 1 ou 2, dans lesquelles le copolyamide A présente une température de fusion Tₘ inférieure à 330 °C (mesurée par DSC selon ISO 11357 - 2, 3 et 7).

4. Matières à mouler à base de copolyamide selon les revendications 1 à 3, dans lesquelles le copolyamide A présente un quotient T_{G}(K)/Tₘ(K) d'au moins 0,71.

5. Matières à mouler à base de copolyamide selon les revendications 1 à 4, contenant comme motifs a₁) de l'hexaméthylènediamine et de l'acide téréphtalique.

6. Utilisation des matières à mouler à base de copolyamide selon les revendications 1 à 5, pour la production de fibres, films et corps moulés.

7. Corps moulé, pouvant être obtenu à partir des matières à mouler à base de copolyamide selon les revendications 1 à 5.
